# EUROPEAN PATENT SPECIFICATION

(11) **EP 4 353 137 B1**
(45) Date of publication and mention of the grant of the patent: **13.05.2026**
(21) Application number: 22819158.1
(22) Date of filing: 24.03.2022
(51) Int. Cl.: A47L 11/24, A47L 11/40, A47L 11/20

(54) **CLEANING DEVICE, CLEANING PATH, CLEANING MAP GENERATION METHOD, AND CLEANING MAP GENERATION SYSTEM**
REINIGUNGSVORRICHTUNG, REINIGUNGSPFAD, VERFAHREN ZUR ERZEUGUNG EINER REINIGUNGSKARTE UND SYSTEM ZUR ERZEUGUNG EINER REINIGUNGSKARTE
DISPOSITIF DE NETTOYAGE, TRAJET DE NETTOYAGE, PROCÉDÉ DE GÉNÉRATION DE CARTE DE NETTOYAGE, ET SYSTÈME DE GÉNÉRATION DE CARTE DE NETTOYAGE

(30) Priority: 09.06.2021 CN 202110641810
(43) Date of publication of application: 17.04.2024
(73) Proprietor: Beijing Roborock Innovation Technology Co., Ltd., Beijing 102206 (CN)
(72) Inventor: CONG, Yiming, Beijing 102206 (CN); XIAO, Fujian, Beijing 102206 (CN); SUN, Jianbin, Beijing 102206 (CN)
(74) Representative: Petraz, Gilberto Luigi
(86) International application number: PCT/CN2022/082867
(87) International publication number: WO 2022/257553

(56) References cited:
- EP-A1- 3 750 464
- EP-B1- 3 138 459
- CN-A- 107 943 044
- CN-A- 108 803 599
- CN-A- 112 401 763
- CN-A- 112 716 376
- CN-A- 113 693 501
- JP-A- 2002 085 305
- TW-A- 201 824 099
- TW-A- 201 824 099

## Description

### TECHNICAL FIELD

The present invention relates to the technical field of cleaning routes of cleaning devices, and more particularly to a cleaning device, a method and system for generating a cleaning route, and a method and system for generating a cleaning map.

### BACKGROUND ART

At present, a sweeping robot can display a cleaned route on a generated map. However, with the diversification of functions of sweeping robots, the emergence of sweeping and mopping integrated robots makes it necessary to display a sweeping route and a mopping route on a map in a distinguished fashion. Therefore, it is necessary to develop a cleaning device capable of acquiring distinguished cleaning routes, a method and system for generating a cleaning route, and a method and system for generating a cleaning map. A method for generating a cleaning route of a cleaning device is already known e.g. from EP-A-3750464.

### SUMMARY OF THE INVENTION

### I. Object of the invention

The present invention aims to provide a cleaning device capable of acquiring distinguished cleaning routes, a method and system for generating a cleaning route, and a method and system for generating a cleaning map.

### II. Technical solution

To solve the foregoing problem, a first aspect of embodiments of the present disclosure provides a method for generating a cleaning route for a cleaning device. The method includes: determining a moving route of the cleaning device; determining a state mode of the cleaning device; determining a water consumption of the cleaning device; and generating the cleaning route of the cleaning device based on the moving route of the cleaning device, the state mode of the cleaning device, and the water consumption of the cleaning device, wherein the state mode of the cleaning device includes one or more of a sweeping state mode, a mopping state mode, a sweeping and mopping state mode, and a sweeping and mopping idle state mode; and the cleaning route includes one or more of a sweeping route, a mopping route, a sweeping and mopping route, and a sweeping and mopping idle route that correspond to the state mode of the cleaning device.

In some embodiments, the determining the moving route of the cleaning device includes: generating an environmental map based on acquired environmental data; and generating the moving route of the cleaning device based on movement data about moving from a coordinate point in the environmental map to a next coordinate point.

In some embodiments, the determining the state mode of the cleaning device includes: determining that the cleaning device is in the sweeping state mode in response to a sweeping module of the cleaning device being in a working state and a mopping module of the cleaning device being in an idle state.

In some embodiments, the determining a working mode of the cleaning device includes: determining that the cleaning device is in the mopping state mode in response to the mopping module of the cleaning device being in a working state and the sweeping module of the cleaning device being in an idle state.

In some embodiments, the determining the working mode of the cleaning device includes: determining that the cleaning device is in the sweeping and mopping state mode in response to both the sweeping module and the mopping module being in the working state.

In some embodiments, it is determined that the cleaning device is in the sweeping and mopping idle state mode in response to both the sweeping module and the mopping module being in the idle state.

In some embodiments, the determining the water consumption of the cleaning device includes:
determining the water consumption of the cleaning device in response to the cleaning device being in the sweeping state mode; and/or
determining the water consumption of the cleaning device in response to the cleaning device being in the mopping state mode; and/or
determining the water consumption of the cleaning device in response to the cleaning device being in the sweeping and mopping state mode; and/or
determining the water consumption of the cleaning device in response to the cleaning device being in the sweeping and mopping idle state mode.

In some embodiments, the determining the cleaning route of the cleaning device based on the moving route of the cleaning device, the state mode of the cleaning device, and the water consumption of the cleaning device includes:
determining the sweeping route in response to the cleaning device being in the sweeping state mode, based on the moving route of the cleaning device in the sweeping state mode, and the water consumption of the cleaning device in the sweeping state mode; and/or
determining the mopping route in response to the cleaning device being in the mopping state mode, based on the moving route of the cleaning device in the mopping state mode, and the water consumption of the cleaning device in the mopping state mode; and/or
determining the sweeping and mopping route in response to the cleaning device being in the sweeping and mopping state mode, based on the moving route of the cleaning device in the sweeping and mopping state mode, and the water consumption of the cleaning device in the sweeping and mopping state mode; and/or
determining the sweeping and mopping idle route in response to the cleaning device being in the sweeping and mopping idle state mode, based on the moving route of the cleaning device in the sweeping and mopping idle state mode, and the water consumption of the cleaning device in the sweeping and mopping idle state mode.

A second aspect of the embodiments of the present disclosure provides a method for generating a cleaning map for a cleaning device. The method includes: determining a cleaning route according to the method for generating the cleaning route of the cleaning device according to the first aspect of the embodiments of the present disclosure; acquiring an environmental map; and generating the cleaning map by superimposing the cleaning route on the environmental map.

A third aspect of the embodiments of the present disclosure provides a cleaning device. The cleaning device is configured to generate a cleaning map using the method for generating the cleaning map of the cleaning device according to the second aspect of the embodiments of the present disclosure.

A fourth aspect of the embodiments of the present disclosure provides a system for generating a cleaning map of a cleaning device. The system includes: the cleaning device according to the third aspect of the embodiments of the present disclosure; a terminal, configured to display the cleaning map generated by the cleaning device; and a server, in signal connection with the cleaning device and the terminal separately, configured to receive and store the cleaning map sent by the cleaning device, and further configured to send the cleaning map to the terminal.

In some embodiments, a sweeping route in the cleaning map displayed by the terminal is line-shaped.

In some embodiments, a mopping route in the cleaning map displayed by the terminal is flake-shaped.

### III. Beneficial effects

The above technical solutions of the present disclosure have the following beneficial technical effects.

The cleaning device acquires cleaning routes in different cleaning state modes, and displays the cleaning routes in the environmental map in a distinguished fashion, so that a user can view and compare actual cleaning effects, and is enabled to more clearly see places where a sweeping robot works and types of cleaning that is performed on the places respectively. Therefore, the user can know whether there is missed sweeping, missed mopping, wrong sweeping, and wrong mopping.

### BRIEF DESCRIPTION OF THE DRAWINGS

FIG. 1 is a schematic flowchart of a method for generating a cleaning route of a cleaning device according to an embodiment of the present disclosure;
FIG. 2 is a schematic structural diagram of a cleaning device according to an embodiment of the present disclosure;
FIG. 3 is a schematic structural diagram of a cleaning device according to an embodiment of the present disclosure; and
FIG. 4 is a schematic diagram of a cleaning map according to an embodiment of the present disclosure.

Reference numerals in the accompanying drawings are as follows:
100: mobile platform; 101: forward portion; 102: rearward portion; 110: perception system; 111: position determining apparatus; 112: buffer; 120: driving system; 130: energy system; 140: human-computer interaction system; 150: sweeping module; 160: mopping module; 161: cleaning head; 1611: fixed region; and 1612: movable region.

### DETAILED DESCRIPTION

To make the objectives, technical solutions, and advantages of the present disclosure clearer, the present disclosure is further described in detail below with reference to the accompanying drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

Terms used in the embodiments of the present disclosure are merely intended to describe specific embodiments, and are not intended to limit the present disclosure. The singular forms "a/an", "said" and "the" used in the embodiments of the present disclosure and the appended claims are intended to include the plural forms as well, unless otherwise indicated clearly in the context. The term "a plurality of" generally includes at least two.

It is to be understood that, the term "and/or" used herein only describes an association relationship between associated objects, and indicates that there may be three kinds of relationships. For example, A and/or B may indicate three cases: A exists alone, A and B exist at the same time, and B exists alone. In addition, the character "/" in the description generally indicates an "or" relationship between contextually associated objects.

It should be understood that although components may be described by using terms first, second, third, and the like in the embodiments of the present disclosure, these components should not be limited to these terms. These terms are used only to distinguish between these components. For example, without departing from the scope of the embodiments of the present disclosure, "first" may also be referred to as "second", and similarly, "second" may also be referred to as "first".

It should be further noted that, the terms "comprise", "include" and any other variants thereof are intended to cover non-exclusive inclusion, so that a commodity or an apparatus that includes a series of elements includes not only these very elements but also other elements that are not expressly listed, or also include elements inherent to this commodity or apparatus. Without more restrictions, an element defined by the phrase "including a ..." does not exclude the presence of another same element in a commodity or an apparatus that includes the element.

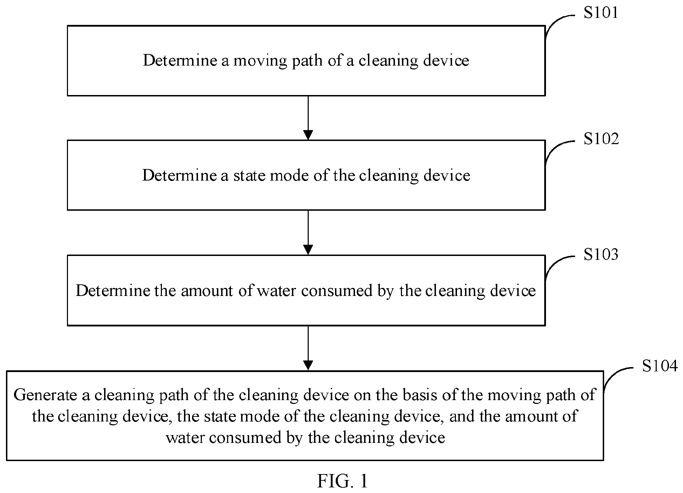

FIG. 1 is a schematic flowchart of a method for generating a cleaning route of a cleaning device according to an embodiment of the present disclosure.

In a first embodiment of the present disclosure, a method for generating a cleaning route of a cleaning device is provided. The cleaning device may be a vacuum floor sucking robot, a floor mopping/sweeping robot, a window climbing robot, or the like. For the purpose of presentation only, the following description in the embodiments is illustrated by taking a cleaning robot having both a sweeping function and a mopping function as an example.

As shown in FIG. 1, the method for generating the cleaning route of the cleaning device mainly includes the following steps.

In S101, a moving route of the cleaning device is determined.

In some embodiments, an environmental map is generated based on acquired environmental data; and the moving route of the cleaning device is generated based on movement data about moving from a coordinate point in the environmental map to a next coordinate point.

In some embodiments, a control system of the cleaning device acquires the environmental data by using a perception system 110 of the cleaning device. The environmental data includes at least a cleaning range and a to-be-cleaned environment. The to-be-cleaned environment includes at least data of a to-be-cleaned surface (for example, whether a carpet exists), and an obstacle or a reference object in the to-be-cleaned environment (for example, whether a sofa, a refrigerator, or the like exists in a to-be-cleaned region). A plurality of coordinate points are determined by using an obstacle or a reference object in the to-be-cleaned environment as a reference. For example, a plurality of coordinate points are determined between a sofa (a first reference object) and a chair (a second reference object). The cleaning device can move from the sofa to the chair along the plurality of coordinate points between the sofa and the chair. A moving route of the cleaning device is generated based on movement data about moving from one of the coordinate points to a next coordinate point. The movement data includes at least a movement distance and a movement direction.

After entering the to-be-cleaned environment for the first time, the cleaning device acquires corresponding environmental data and generates an environmental map. Then, each time when the cleaning device performs a sweeping task, the cleaning device acquires environmental data, and updates the environmental map based on the acquired environmental data. A moving route of the cleaning device is generated based on a latest environmental map.

In S102, a state mode of the cleaning device is determined.

In some embodiments, the control system of the cleaning device may determine an overall state mode of the cleaning device based on a running state or running data of a component of the cleaning device. The state mode of the cleaning device includes one or more of a sweeping state mode, a mopping state mode, a sweeping and mopping state mode, and a sweeping and mopping idle state mode. By determining that a sweeping module 150 of the cleaning device is in a working state and that a mopping module 160 of the cleaning device is in an idle state, the control system of the cleaning device determines that the cleaning device is in the sweeping state mode. By determining that the mopping module 160 of the cleaning device is in a working state and that the sweeping module 150 of the cleaning device is in an idle state, the control system of the cleaning device determines that the cleaning device is in the mopping state mode. By determining that both the sweeping module 150 and the mopping module 160 are in the working state, the control system of the cleaning device determines that the cleaning device is in the sweeping and mopping state mode. By determining that both the sweeping module 150 and the mopping module 160 are in the idle state, the control system of the cleaning device determines that the cleaning device is in the sweeping and mopping idle state mode.

S101 and S102 may be performed simultaneously, or preformed successively. An execution sequence of S101 and S102 is not limited.

In S103, a water consumption of the cleaning device is determined.

In some embodiments, the control system of the cleaning device determines the water consumption of the cleaning device in response to the cleaning device being in the sweeping state mode; and/or determines the water consumption of the cleaning device in response to the cleaning device being in the mopping state mode; and/or determines the water consumption of the cleaning device in response to the cleaning device being in the sweeping and mopping state mode; and/or determines the water consumption of the cleaning device in response to the cleaning device being in the sweeping and mopping idle state mode. The water consumptions of the cleaning device in the sweeping state mode and the sweeping and mopping idle state mode are 0. The water consumptions of the cleaning device in the mopping state mode and the sweeping and mopping state mode are determined by a water level sensor or based on a preset water consumption instruction.

In S104, the cleaning route of the cleaning device is generated based on the moving route of the cleaning device, the state mode of the cleaning device, and the water consumption of the cleaning device.

In some embodiments, the cleaning route of the cleaning device includes a variety of pieces of cleaning information: moving route information, water consumption information, and cleaning mode information. The cleaning route includes one or more of a sweeping route, a mopping route, a sweeping and mopping route, and a sweeping and mopping idle route that correspond to the state mode of the cleaning device. The control system of the cleaning device determines the sweeping route in response to the cleaning device being in the sweeping state mode, based on the moving route of the cleaning device in the sweeping state mode, and the water consumption of the cleaning device in the sweeping state mode; and/or determines the mopping route in response to the cleaning device being in the mopping state mode, based on the moving route of the cleaning device in the mopping state mode, and the water consumption of the cleaning device in the mopping state mode; and/or determines the sweeping and mopping route in response to the cleaning device being in the sweeping and mopping state mode, based on the moving route of the cleaning device in the sweeping and mopping state mode, and the water consumption of the cleaning device in the sweeping and mopping state mode; and/or determines the sweeping and mopping idle route in response to the cleaning device being in the sweeping and mopping idle state mode, based on the moving route of the cleaning device in the sweeping and mopping idle state mode, and the water consumption of the cleaning device in the sweeping and mopping idle state mode.

In a second embodiment of the present disclosure, a method for generating a cleaning map of a cleaning device is provided. The method mainly includes the following steps.

In S201, a cleaning route is determined according to the method for generating the cleaning route of the cleaning device according to the first embodiment of the present disclosure. Such setting can accurately reflect a cleaning workload of the cleaning device this time.

In some embodiments, the cleaning route is acquired and generated by the cleaning device that performs a cleaning task.

In S202, an environmental map is acquired.

In some embodiments, the environmental map is generated or updated based on environmental data when the cleaning device performs a cleaning task. Such setting can accurately reflect a cleaning range of the cleaning device this time. For example, if a door of a room in a house is closed, the cleaning device cannot enter the closed room, that is, the closed room has not been swept. Therefore, a user can visually know which room has been cleaned and which room has not been cleaned.

In S203, the cleaning map is generated by superimposing the cleaning route on the environmental map.

In some embodiments, the environmental map is used as a bottom layer. The cleaning route is superimposed on the environmental map to generate the cleaning map.

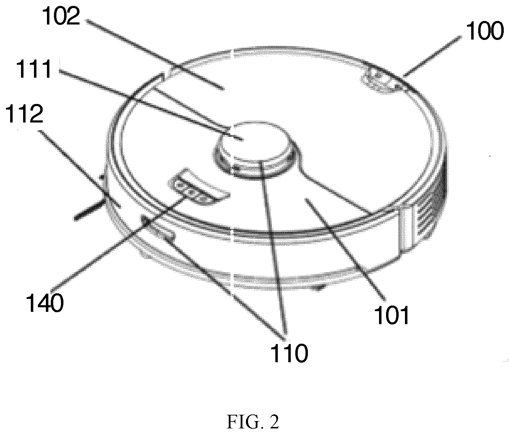

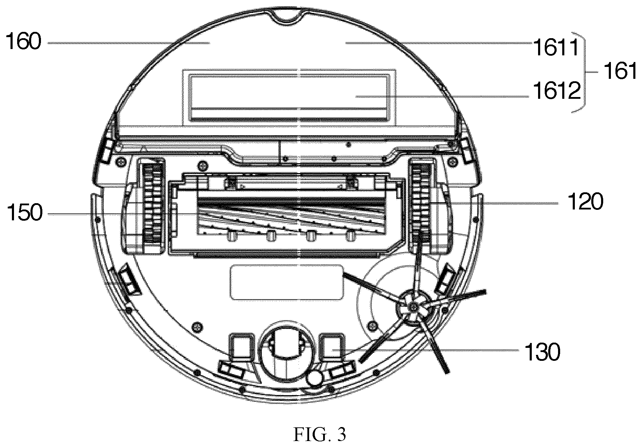

FIG. 2 and FIG. 3 are schematic structural diagrams of a cleaning device according to an embodiment of the present disclosure. In a third embodiment of the present disclosure, as shown in FIG. 2 and FIG. 3, a cleaning device is provided. The cleaning device is configured to generate the cleaning map according to the method for generating the cleaning map of the cleaning device according to the second embodiment of the present disclosure.

In some embodiments, the cleaning device may include a mobile platform 100, a perception system 110, a control system, a driving system 120, a cleaning module, an energy system 130, and a human-computer interaction system 140. The control system may determine an overall state mode of the cleaning device by acquiring running states or running data of the mobile platform 100, the perception system 110, the driving system 120, the cleaning module, the energy system 130, and the human-computer interaction system 140.

The mobile platform 100 may be an autonomous mobile platform or a non-autonomous mobile platform. The autonomous mobile platform means that the mobile platform 100 itself can automatically and adaptively make an operational decision based on an unexpected environmental input; and the non-autonomous mobile platform itself cannot adaptively make an operational decision based on an unexpected environmental input, but can execute a given procedure or operate according to a certain logic. Correspondingly, when the mobile platform 100 is the autonomous mobile platform, a target direction may be determined autonomously by the automatic cleaning device; and when the mobile platform 100 is the non-autonomous mobile platform, the target direction may be set systematically or manually. When the mobile platform 100 is the autonomous mobile platform, the mobile platform 100 includes a forward portion 101 and a rearward portion 102.

The perception system 110 includes a position determining apparatus 111 located on the mobile platform 100, a buffer 112 located in the forward portion 101 of the mobile platform 100, cliff sensors and sensing apparatuses such as an ultrasonic sensor (not shown), an infrared sensor (not shown), a magnetometer (not shown), an accelerometer (not shown), a gyroscope (not shown) and an odometer (not shown) located at the bottom of the mobile platform 100, for providing various position information and motion state information of the cleaning device to the control system.

The position determining apparatus 111 includes, but is not limited to, a camera and a laser direct structuring (LDS) apparatus.

Various components in the perception system 110 may operate independently, or operate together to achieve a target function more accurately. A to-be-cleaned surface is identified by the cliff sensors and the ultrasonic sensor to determine physical properties of the to-be-cleaned surface, including a surface material, a degree of cleanliness, and the like, which may be determined more accurately in combination with the camera, the LDS, or the like.

The control system is disposed on a main circuit board in the mobile platform 100, and includes a computing processor such as a central processing unit and an application processor, that communicates with a non-transitory memory such as a hard disk, a flash memory and a random-access memory. The application processor is configured to receive environmental information sensed by the plurality of sensors and transmitted from the perception system 110, to draw a simultaneous map of an environment where the automatic cleaning device is located using a positioning algorithm, for example, simultaneous localization and mapping (SLAM), based on obstacle information fed back by the LDS apparatus, to autonomously determine a traveling route based on the environmental information and the environmental map, and then to control the driving system 120 to perform operations, such as traveling forward, traveling backward, and/or steering based on the autonomously determined traveling route. The control system may also determine whether to activate the cleaning module to perform a cleaning operation based on the environmental information and the environmental map.

The forward portion 101 of the mobile platform 100 is provided with the buffer 112. During cleaning, the buffer 112 detects one or more events (or objects) in a traveling route of the automatic cleaning device via a sensor system, e.g., an infrared sensor. The automatic cleaning device may control a driving wheel assembly based on the event (or object), such as an obstacle and a wall, detected by the buffer 112 to cause the automatic cleaning device to respond to the event (or object), for example, to move away from the obstacle.

The control system may comprehensively determine, based on distance information and speed information which are fed back by the buffer 112, the cliff sensors and the sensing apparatuses such as the ultrasonic sensor, the infrared sensor, the magnetometer, the accelerometer, the gyroscope and the odometer, a current operation state of the floor sweeping robot, such as crossing a threshold, getting on a carpet, locating at an edge of a cliff, being stuck from above or below, having a full dust box or being picked up, and will also give specific next-step action strategies for different situations, so that the operation of the automatic cleaning device is more in line with requirements of an owner and provides better user experience. In some embodiments, the control system can plan the most efficient and reasonable sweeping route and sweeping method based on the real-time map information drawn by using SLAM. This greatly improves the cleaning efficiency of the automatic cleaning device.

In some embodiments, the cleaning device generates the environmental map based on acquired environmental data. The cleaning device generates the moving route of the cleaning device based on movement data about moving from a coordinate point in the environmental map to a next coordinate point.

In some embodiments, the control system acquires the environmental data by using the perception system 110. The environmental data includes at least a cleaning range and a to-be-cleaned environment. The to-be-cleaned environment includes at least floor data (for example, whether a carpet exists), and an obstacle or a reference object in the to-be-cleaned environment (for example, whether a sofa, a refrigerator, or the like exists in a to-be-cleaned region). A plurality of coordinate points is determined by using an obstacle or a reference object in the to-be-cleaned environment as a reference. For example, a plurality of coordinate points is determined between a sofa (a first reference object) and a chair (a second reference object). The cleaning device can move from the sofa to the chair along the plurality of coordinate points between the sofa and the chair. A moving route of the cleaning device is generated based on movement data about moving from one of the coordinate points to a next coordinate point. The movement data includes at least a movement distance and a movement direction.

After entering the to-be-cleaned environment for the first time, the cleaning device acquires corresponding environmental data and generates an environmental map. Then, each time when the cleaning device performs a sweeping task, the cleaning device acquires environmental data, and updates the environmental map based on the acquired environmental data. A moving route of the cleaning device is generated based on a latest environmental map.

The cleaning module includes a sweeping module 150 and a mopping module 160. The sweeping module 150 includes a rolling brush, a dust box, a blower and an air outlet. The sweeping module 150 may further include a side brush having a rotary shaft angled relative to the floor, for moving debris into a region of the rolling brush of the cleaning module. The rolling brush having a certain interference with the floor sweeps up garbage on the floor and rolls up the garbage to the front of a dust suction inlet between the rolling brush and the dust box, and then the garbage is sucked into the dust box by air having a suction force, which is generated by the blower and passes through the dust box. The garbage is isolated inside the dust box close to the dust suction inlet by a filter, and the filter completely isolates the dust suction inlet from the air outlet, so that the filtered air enters the blower through the air outlet.

The sweeping module 150 is connected to a floating lifting and lowering structure, which is configured to enable the sweeping module 150 to passively move vertically relative to the mobile platform 100. In some embodiments, the floating lifting and lowering structure is a parallelogram four-link lifting and lowering structure configured to passively switch the sweeping module 150 between a lifted state and a lowered state under the action of an external force. By providing the sweeping module 150 with the four-link floating lifting and lowering structure, the sweeping module 150 is enabled to passively move vertically relative to the mobile platform 100. The rolling brush of the sweeping module 150 moves away from the to-be-cleaned surface, that is, the sweeping module 150 is suspended on the to-be-cleaned surface. In this case, the sweeping module 150 is in an idle state. When the sweeping module 150 needs to be switched from the idle state to a working state, the sweeping module 150 is lowered to make the rolling brush of the sweeping module 150 interfere with the to-be-cleaned surface. In the case of encountering an obstacle during operation, the cleaning device may easily pass the obstacle through the four-link floating lifting and lowering structure, thereby avoiding the damage to the cleaning device by the obstacle.

The mopping module 160 includes a cleaning head 161 and a driving unit. The cleaning head 161 is configured to clean at least one portion of an operating surface (for example, floor). The driving unit is configured to drive the cleaning head 161 to mainly perform a reciprocating motion along a target surface. The target surface is a portion of the operating surface. The cleaning head 161 performs a reciprocating motion along the to-be-cleaned surface. A surface of the cleaning head 161 in contact with the to-be-cleaned surface is provided with cleaning cloth or a cleaning plate, which generates a high-frequency friction with the to-be-cleaned surface through the reciprocating motion, thereby removing stains on the to-be-cleaned surface. In some embodiments, the cleaning head 161 includes a fixed region 1611 and a movable region 1612. The fixed region 1611 is disposed at the bottom of the mobile platform 100. The movable region 1612 is configured to perform a reciprocating motion along the target surface, thereby cleaning the target surface.

The mopping module 160 is movably connected to the mobile platform 100 through the four-link lifting and lowering structure. The four-link lifting and lowering structure is of a parallelogram structure and is configured to switch the mopping module 160 between a lifted state and a lowered state. In the lifted state, the mopping module 160 moves away from the operating surface, and the cleaning head 161 moves away from the to-be-cleaned surface, that is, the mopping module 160 is suspended on the to-be-cleaned surface. In this case, the mopping module 160 is in an idle state. When the mopping module 160 needs to be switched from the idle state to a working state, the mopping module 160 is lowered to be in contact with the floor. When a mopping task is performed completely, the mopping module 160 is lifted to be separated from the floor. Therefore, the increase in resistance due to the existence of the cleaning module is avoided when the cleaning device moves freely on the to-be-cleaned surface. In addition, the mopping module 160 is in contact with the to-be-cleaned surface. However, when the driving unit of the mopping module 160 does not drive the cleaning head 161 to work, the mopping module 160 is also in an idle state.

When acquiring that the sweeping module 150 is in the lowered state, the control system determines that the sweeping module 150 is in the working state. In addition, when acquiring that the mopping module 160 is in the lowered state, but the driving unit does not drive the cleaning head 161 to work; or when acquiring that the mopping module 160 is in the lifted state, the control system determines that the mopping module 160 is in the idle state, and then determines that the cleaning device is in the sweeping state mode.

When acquiring that the sweeping module 150 is in the lowered state, the control system determines that the sweeping module 150 is in the working state. In addition, when acquiring that the mopping module 160 is in the lowered state, and the driving unit drives the cleaning head 161 to work, the control system determines that the mopping module 160 is in the working state, and then determines that the cleaning device is in the sweeping and mopping state mode.

In some embodiments, the cleaning device determines the water consumption of the cleaning device in response to the cleaning device being in the sweeping state mode; and/or determines the water consumption of the cleaning device in response to the cleaning device being in the mopping state mode; and/or determines the water consumption of the cleaning device in response to the cleaning device being in the sweeping and mopping state mode; and/or determines the water consumption of the cleaning device in response to the cleaning device being in the sweeping and mopping idle state mode.

In some embodiments, the water consumptions of the cleaning device in the sweeping state mode and the sweeping and mopping idle state mode are 0. The water consumptions of the cleaning device in the mopping state mode and the sweeping and mopping state mode are determined by a water level sensor or based on a preset water consumption instruction.

In some embodiments, the cleaning device determines the sweeping route in response to the cleaning device being in the sweeping state mode, based on the moving route of the cleaning device in the sweeping state mode, and the water consumption of the cleaning device in the sweeping state mode; and/or determines the mopping route in response to the cleaning device being in the mopping state mode, based on the moving route of the cleaning device in the mopping state mode, and the water consumption of the cleaning device in the mopping state mode; and/or determines the sweeping and mopping route in response to the cleaning device being in the sweeping and mopping state mode, based on the moving route of the cleaning device in the sweeping and mopping state mode, and the water consumption of the cleaning device in the sweeping and mopping state mode; and/or determines the sweeping and mopping idle route in response to the cleaning device being in the sweeping and mopping idle state mode, based on the moving route of the cleaning device in the sweeping and mopping idle state mode, and the water consumption of the cleaning device in the sweeping and mopping idle state mode.

In a fourth embodiment of the present disclosure, a system for generating a cleaning map of a cleaning device is provided. The system mainly includes: the cleaning device according to the third embodiment of the present disclosure, a terminal configured to display the cleaning map generated by the cleaning device, and a server. The server is in signal connection with the cleaning device and the terminal separately, configured to receive and store the cleaning map sent by the cleaning device, and further configured to send the cleaning map to the terminal.

In some embodiments, the cleaning device starts performing a cleaning task from a charging pile to an initial cleaning point based on a preset cleaning instruction, acquires a surrounding to-be-cleaned environment through the perception system 110 at the same time, and generates a cleaning map. The cleaning device sends the real-time generated cleaning map to a remote server, which stores the cleaning map and sends the cleaning map to the terminal, so that the cleaning map is displayed first. The terminal may be a mobile phone, a tablet computer, or a smart device.

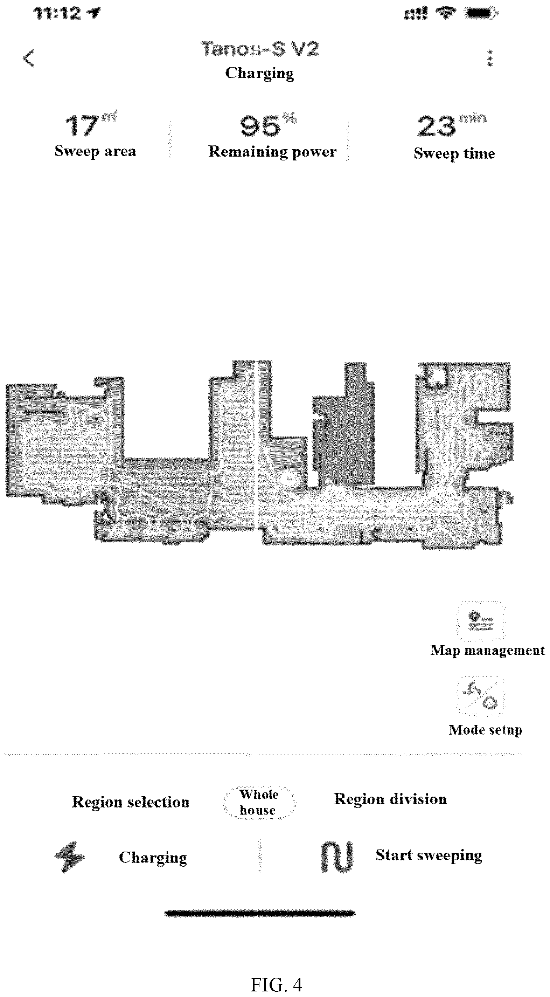

FIG. 4 is a schematic diagram of a cleaning map according to an embodiment of the present disclosure.

In some embodiments, as shown in FIG. 4, the cleaning route includes one or more of a sweeping route, a mopping route, and a sweeping and mopping route.

In some embodiments, the sweeping route in the cleaning map displayed by the terminal is line-shaped.

In some embodiments, the mopping route in the cleaning map displayed by the terminal is flake-shaped.

In some embodiments, the mopping route has a shadow. A larger water consumption of the cleaning device leads to a darker color of the shadow. A smaller water consumption of the cleaning device leads to a lighter color of the shadow.

The above embodiments are only used to illustrate the technical solutions of the present invention and are not intended to limit the present invention. Although the present invention has been described in detail with reference to the foregoing embodiments, those of ordinary skills in the art should understand that, they can still make modifications to the technical solutions described in the foregoing embodiments or make equivalent substitutions to some of the technical features; and these modifications or substitutions do not make the essence of the corresponding technical solutions deviate from the scope of the technical solutions of the various embodiments of the present invention as defined by the appended claims.

## Claims

1. A method for generating a cleaning route of a cleaning device, comprising:
determining (S101) a moving route of the cleaning device;
determining (S102) a state mode of the cleaning device;
determining (S103) a water consumption of the cleaning device; and
generating (S104) the cleaning route of the cleaning device based on the moving route of the cleaning device, the state mode of the cleaning device, and the water consumption of the cleaning device, wherein
the state mode of the cleaning device comprises one or more of a sweeping state mode, a mopping state mode, a sweeping and mopping state mode, and a sweeping and mopping idle state mode; and the cleaning route comprises one or more of a sweeping route, a mopping route, a sweeping and mopping route, and a sweeping and mopping idle route that correspond to the state mode of the cleaning device.

2. The method according to claim 1, wherein
the determining the moving route of the cleaning device comprises:
generating an environmental map based on acquired environmental data; and
generating the moving route of the cleaning device based on movement data about moving from a coordinate point in the environmental map to a next coordinate point.

3. The method according to claim 1, wherein
the determining the state mode of the cleaning device comprises:
determining that the cleaning device is in the sweeping state mode in response to a sweeping module of the cleaning device being in a working state and a mopping module of the cleaning device being in an idle state.

4. The method according to claim 1, wherein
the determining the state mode of the cleaning device comprises:
determining that the cleaning device is in the mopping state mode in response to a mopping module of the cleaning device being in a working state and a sweeping module of the cleaning device being in an idle state.

5. The method according to claim 1, wherein
the determining the state mode of the cleaning device comprises:
determining that the cleaning device is in the sweeping and mopping state mode in response to both a sweeping module and a mopping module being in the working state.

6. The method according to claim 1, wherein
the determining the state mode of the cleaning device comprises:
determining that the cleaning device is in the sweeping and mopping idle state mode in response to both a sweeping module and a mopping module being in the idle state.

7. The method according to claim 1, wherein
the determining the water consumption of the cleaning device comprises:
determining the water consumption of the cleaning device in response to the cleaning device being in the sweeping state mode; and/or
determining the water consumption of the cleaning device in response to the cleaning device being in the mopping state mode; and/or
determining the water consumption of the cleaning device in response to the cleaning device being in the sweeping and mopping state mode; and/or
determining the water consumption of the cleaning device in response to the cleaning device being in the sweeping and mopping idle state mode.

8. The method according to claim 1, wherein
the determining the cleaning route of the cleaning device based on the moving route of the cleaning device, the state mode of the cleaning device, and the water consumption of the cleaning device comprises:
determining the sweeping route in response to the cleaning device being in the sweeping state mode, based on the moving route of the cleaning device in the sweeping state mode, and the water consumption of the cleaning device in the sweeping state mode; and/or
determining the mopping route in response to the cleaning device being in the mopping state mode, based on the moving route of the cleaning device in the mopping state mode, and the water consumption of the cleaning device in the mopping state mode; and/or
determining the sweeping and mopping route in response to the cleaning device being in the sweeping and mopping state mode, based on the moving route of the cleaning device in the sweeping and mopping state mode, and the water consumption of the cleaning device in the sweeping and mopping state mode; and/or
determining the sweeping and mopping idle route in response to the cleaning device being in the sweeping and mopping idle state mode, based on the moving route of the cleaning device in the sweeping and mopping idle state mode, and the water consumption of the cleaning device in the sweeping and mopping idle state mode.

9. The method according to claim 1, wherein the cleaning route is used for being displayed on an environmental map, and the cleaning route comprises moving route information, water consumption information, and cleaning mode information.

10. The method according to claim 1, wherein the mopping route is to be displayed in different displaying effects depending on different water consumptions.

11. A method for generating a cleaning map of a cleaning device, comprising:
determining a cleaning route using the method for generating the cleaning route of the cleaning device according to any one of claims 1 to 10;
acquiring an environmental map; and
generating the cleaning map by superimposing the cleaning route on the environmental map.

12. A cleaning device, comprising: a processor and a memory, wherein
the processor is configured to implement the method for generating the cleaning map of the cleaning device according to claim 11 by executing an executable instruction stored in the memory, in order to generate the cleaning map.

13. A system for generating a cleaning map of a cleaning device, comprising:
the cleaning device according to claim 12;
a terminal, configured to display the cleaning map generated by the cleaning device; and
a server, in signal connection with the cleaning device and the terminal separately, configured to receive and store the cleaning map sent by the cleaning device, and further configured to send the cleaning map to the terminal.

14. The system for generating the cleaning map of the cleaning device according to claim 13, wherein
a sweeping route in the cleaning map displayed by the terminal is line-shaped.

15. The system for generating the cleaning map of the cleaning device according to claim 13, wherein
a mopping route in the cleaning map displayed by the terminal is flake-shaped.

## Patentansprüche

1. Verfahren zur Erzeugung einer Reinigungsroute einer Reinigungsvorrichtung, umfassend:
Bestimmen (S101) einer Bewegungsroute der Reinigungsvorrichtung;
Bestimmen (S102) eines Zustandsmodus der Reinigungsvorrichtung;
Bestimmen (S103) eines Wasserverbrauchs der Reinigungsvorrichtung; und
Erzeugen (S104) der Reinigungsroute der Reinigungsvorrichtung aufgrund der Bewegungsroute der Reinigungsvorrichtung, des Zustandsmodus der Reinigungsvorrichtung und des Wasserverbrauchs der Reinigungsvorrichtung, worin
der Zustandsmodus der Reinigungsvorrichtung einen oder mehrere von einem Kehrzustandsmodus, einem Wischzustandsmodus, einem Kehr- und Wischzustandsmodus und einem Kehr- und Wisch-Ruhezustandsmodus umfasst; und die Reinigungsroute eine oder mehrere von einer Kehrroute, einer Wischroute, einer Kehr- und Wischroute und einer Kehr- und Wischzustandsroute umfasst, die dem Zustandsmodus der Reinigungsvorrichtung entsprechen.

2. Verfahren nach Anspruch 1, worin
das Bestimmen der Bewegungsroute der Reinigungsvorrichtung umfasst:
Erzeugen einer Umgebungskarte aufgrund von erfassten Umgebungsdaten; und
Erzeugen der Bewegungsroute der Reinigungsvorrichtung aufgrund von Bewegungsdaten über das Bewegen von einem Koordinatenpunkt in der Umgebungskarte zu einem nächsten Koordinatenpunkt.

3. Verfahren nach Anspruch 1, worin
das Bestimmen des Zustandsmodus der Reinigungsvorrichtung umfasst:
Bestimmen, dass die Reinigungsvorrichtung sich im Kehrzustandsmodus als Antwort darauf befindet, dass ein Kehrmodul der Reinigungsvorrichtung sich in einem Betriebszustand befindet und ein Wischmodul der Reinigungsvorrichtung sich in einem Ruhezustand befindet.

4. Verfahren nach Anspruch 1, worin
das Bestimmen des Zustandsmodus der Reinigungsvorrichtung umfasst:
Bestimmen, dass die Reinigungsvorrichtung sich im Wischzustandsmodus als Antwort darauf befindet, dass ein Wischmodul der Reinigungsvorrichtung sich in einem Betriebszustand befindet und ein Kehrmodul der Reinigungsvorrichtung sich in einem Ruhezustand befindet.

5. Verfahren nach Anspruch 1, worin
das Bestimmen des Zustandsmodus der Reinigungsvorrichtung umfasst:
Bestimmen, dass die Reinigungsvorrichtung sich im Kehr- und Wischzustandsmodus als Antwort darauf befindet, dass sowohl ein Kehrmodul als auch ein Wischmodul sich im Betriebszustand befinden.

6. Verfahren nach Anspruch 1, worin
das Bestimmen des Zustandsmodus der Reinigungsvorrichtung umfasst:
Bestimmen, dass die Reinigungsvorrichtung sich im Kehr- und Wisch-Ruhezustandsmodus als Antwort darauf befindet, dass sowohl ein Kehrmodul als auch ein Wischmodul sich im Ruhezustand befinden.

7. Verfahren nach Anspruch 1, worin
das Bestimmen des Wasserverbrauchs der Reinigungsvorrichtung umfasst:
Bestimmen des Wasserverbrauchs der Reinigungsvorrichtung als Antwort darauf, dass die Reinigungsvorrichtung sich im Kehrzustandsmodus befindet; und/oder
Bestimmen des Wasserverbrauchs der Reinigungsvorrichtung als Antwort darauf, dass die Reinigungsvorrichtung sich im Wischzustandsmodus befindet; und/oder
Bestimmen des Wasserverbrauchs der Reinigungsvorrichtung als Antwort darauf, dass die Reinigungsvorrichtung sich im Kehr- und Wischzustandsmodus befindet; und/oder
Bestimmen des Wasserverbrauchs der Reinigungsvorrichtung als Antwort darauf, dass die Reinigungsvorrichtung sich im Kehr- und Wisch-Ruhezustandsmodus befindet.

8. Verfahren nach Anspruch 1, worin
das Bestimmen der Reinigungsroute der Reinigungsvorrichtung aufgrund der Bewegungsroute der Reinigungsvorrichtung, des Zustandsmodus der Reinigungsvorrichtung und des Wasserverbrauchs der Reinigungsvorrichtung umfasst:
Bestimmen der Kehrroute als Antwort darauf, dass die Reinigungsvorrichtung sich im Kehrzustandsmodus befindet, aufgrund der Bewegungsroute der Reinigungsvorrichtung im Kehrzustandsmodus, und des Wasserverbrauchs der Reinigungsvorrichtung im Kehrzustandsmodus; und/oder
Bestimmen der Wischroute als Antwort darauf, dass die Reinigungsvorrichtung sich im Wischzustandsmodus befindet, aufgrund der Bewegungsroute der Reinigungsvorrichtung im Wischzustandsmodus, und des Wasserverbrauchs der Reinigungsvorrichtung im Wischzustandsmodus; und/oder
Bestimmen der Kehr- und Wischroute als Antwort darauf, dass die Reinigungsvorrichtung sich im Kehr- und Wischzustandsmodus befindet, aufgrund der Bewegungsroute der Reinigungsvorrichtung im Kehr- und Wischzustandsmodus, und des Wasserverbrauchs der Reinigungsvorrichtung im Kehr- und Wischzustandsmodus; und/oder
Bestimmen der Kehr- und Wisch-Ruheroute als Antwort darauf, dass die Reinigungsvorrichtung sich im Kehr- und Wisch-Ruhezustandsmodus befindet, aufgrund der Bewegungsroute der Reinigungsvorrichtung im Kehr- und Wisch-Ruhezustandsmodus, und des Wasserverbrauchs der Reinigungsvorrichtung im Kehr- und Wisch-Ruhezustandsmodus.

9. Verfahren nach Anspruch 1, worin die Reinigungsroute benutzt wird, um auf einer Umgebungskarte angezeigt zu werden, und die Reinigungsroute Bewegungsrouteinformationen, Wasserverbrauchsinformationen und Reinigungsmodusinformationen umfasst.

10. Verfahren nach Anspruch 1, worin die Wischroute in verschiedenen Anzeigeeffekten je nach verschiedenen Wasserverbräuchen angezeigt werden soll.

11. Verfahren zur Erzeugung einer Reinigungskarte einer Reinigungsvorrichtung, umfassend:
Bestimmen einer Reinigungskarte durch Verwendung des Verfahrens zur Erzeugung der Reinigungsroute der Reinigungsvorrichtung nach einem der Ansprüche 1 bis 10;
Erfassen einer Umgebungskarte; und
Erzeugen der Reinigungskarte durch Überlagerung der Reinigungsroute auf die Umgebungskarte.

12. Reinigungsvorrichtung, umfassend: einen Prozessor und einen Speicher, worin
der Prozessor dazu konfiguriert ist, das Verfahren zur Erzeugung der Reinigungskarte der Reinigungsvorrichtung nach Anspruch 11 durch Ausführung einer ausführbaren Anweisung, die im Speicher gespeichert ist, zu implementieren, um die Reinigungskarte zu erzeugen.

13. System zur Erzeugung einer Reinigungskarte einer Reinigungsvorrichtung, umfassend:
die Reinigungsvorrichtung nach Anspruch 12;
ein Endgerät, das dazu konfiguriert ist, die Reinigungskarte anzuzeigen, die von der Reinigungsvorrichtung erzeugt wird; und
einen Server, der mit der Reinigungsvorrichtung und dem Endgerät getrennt in Signalverbindung steht, der dazu konfiguriert ist, die Reinigungskarte zu empfangen und zu speichern, die von der Reinigungsvorrichtung gesandt wird, und ferner dazu konfiguriert ist, die Reinigungskarte an das Endgerät zu senden.

14. System zur Erzeugung der Reinigungskarte der Reinigungsvorrichtung nach Anspruch 13, worin
eine Kehrroute in der Reinigungskarte, die vom Endgerät angezeigt wird, linienförmig ist.

15. System zur Erzeugung der Reinigungskarte der Reinigungsvorrichtung nach Anspruch 13, worin
eine Wischroute in der Reinigungskarte, die vom Endgerät angezeigt wird, flockenförmig ist.

## Revendications

1. Procédé de génération d'un itinéraire de nettoyage d'un dispositif de nettoyage, comprenant :
la détermination (S101) d'un itinéraire de déplacement du dispositif de nettoyage ;
la détermination (S102) d'un mode d'état du dispositif de nettoyage ;
la détermination (S103) d'une consommation d'eau du dispositif de nettoyage ; et
la génération (S104) de l'itinéraire de nettoyage du dispositif de nettoyage en fonction de l'itinéraire de déplacement du dispositif de nettoyage, du mode d'état du dispositif de nettoyage et de la consommation d'eau du dispositif de nettoyage, dans lequel
le mode d'état du dispositif de nettoyage comprend un ou plusieurs des modes suivants : un mode d'état de balayage, un mode d'état de nettoyage, un mode d'état de balayage et de nettoyage et un mode d'état de repos de balayage et de nettoyage ; et l'itinéraire de nettoyage comprend un ou plusieurs des modes suivants : un itinéraire de balayage, un itinéraire de nettoyage, un itinéraire de balayage et de nettoyage et un itinéraire de repos de balayage et de nettoyage qui correspondent au mode d'état du dispositif de nettoyage.

2. Procédé selon la revendication 1, dans lequel
la détermination de l'itinéraire de déplacement du dispositif de nettoyage comprend :
la génération d'une carte environnementale basée sur les données environnementales acquises ; et
la génération de l'itinéraire de déplacement du dispositif de nettoyage sur la base des données de déplacement concernant le déplacement d'un point de coordonnées dans la carte environnementale à un point de coordonnées suivant.

3. Procédé selon la revendication 1, dans lequel
la détermination du mode d'état du dispositif de nettoyage comprend :
la détermination que le dispositif de nettoyage est dans le mode d'état de balayage en réponse à un module de balayage du dispositif de nettoyage étant dans un état de fonctionnement et un module de nettoyage du dispositif de nettoyage étant dans un état de repos.

4. Procédé selon la revendication 1, dans lequel
la détermination du mode d'état du dispositif de nettoyage comprend :
la détermination que le dispositif de nettoyage est en mode d'état de nettoyage en réponse à un module de nettoyage du dispositif de nettoyage étant dans un état de fonctionnement et un module de balayage du dispositif de nettoyage étant dans un état de repos.

5. Procédé selon la revendication 1, dans lequel
la détermination du mode d'état du dispositif de nettoyage comprend :
la détermination que le dispositif de nettoyage est en mode d'état de balayage et de nettoyage en réponse à la fois à l'état de fonctionnement d'un module de balayage et d'un module de nettoyage.

6. Procédé selon la revendication 1, dans lequel
la détermination du mode d'état du dispositif de nettoyage comprend :
la détermination que le dispositif de nettoyage est en mode de balayage et de nettoyage au repos en réponse à la fois à un module de balayage et à un module de nettoyage au repos.

7. Procédé selon la revendication 1, dans lequel
la détermination de la consommation d'eau du dispositif de nettoyage comprend :
la détermination de la consommation d'eau du dispositif de nettoyage en réponse au fait que le dispositif de nettoyage est en mode d'état de balayage ; et/ou
la détermination de la consommation d'eau du dispositif de nettoyage en réponse au fait que le dispositif de nettoyage est en mode d'état de nettoyage ; et/ou
la détermination de la consommation d'eau du dispositif de nettoyage en réponse au fait que le dispositif de nettoyage est en mode de balayage et de nettoyage ; et/ou
la détermination de la consommation d'eau du dispositif de nettoyage en réponse au fait que le dispositif de nettoyage est en mode d'état de balayage et de nettoyage au repos.

8. Procédé selon la revendication 1, dans lequel
la détermination de l'itinéraire de nettoyage du dispositif de nettoyage en fonction de l'itinéraire de déplacement du dispositif de nettoyage, du mode d'état du dispositif de nettoyage et de la consommation d'eau du dispositif de nettoyage comprend :
la détermination de l'itinéraire de balayage en réponse au fait que le dispositif de nettoyage est en mode d'état de balayage, sur la base de l'itinéraire de déplacement du dispositif de nettoyage en mode d'état de balayage et de la consommation d'eau du dispositif de nettoyage en mode d'état de balayage ; et/ou
la détermination de l'itinéraire de nettoyage en réponse au fait que le dispositif de nettoyage est en mode d'état de nettoyage, sur la base de l'itinéraire de déplacement du dispositif de nettoyage en mode d'état de nettoyage et de la consommation d'eau du dispositif de nettoyage en mode d'état de nettoyage ; et/ou
la détermination de l'itinéraire de balayage et de nettoyage en réponse au fait que le dispositif de nettoyage est en mode d'état de balayage et de nettoyage, sur la base de l'itinéraire de déplacement du dispositif de nettoyage en mode d'état de balayage et de nettoyage et de la consommation d'eau du dispositif de nettoyage en mode d'état de balayage et de nettoyage ; et/ou
la détermination de l'itinéraire de balayage et de nettoyage au repos en réponse au fait que le dispositif de nettoyage est dans le mode de balayage et de nettoyage au repos, sur la base de l'itinéraire de déplacement du dispositif de nettoyage en mode de balayage et de nettoyage au repos, et de la consommation d'eau du dispositif de nettoyage en mode de balayage et de nettoyage au repos.

9. Procédé selon la revendication 1, dans lequel la route de nettoyage est utilisée pour être affichée sur une carte environnementale, et la route de nettoyage comprend des informations d'itinéraire de déplacement, des informations de consommation d'eau et des informations de mode de nettoyage.

10. Procédé selon la revendication 1, dans lequel l'itinéraire de nettoyage doit être affiché dans différents effets d'affichage en fonction de différentes consommations d'eau.

11. Procédé de génération d'une carte de nettoyage d'un dispositif de nettoyage, comprenant :
la détermination d'un itinéraire de nettoyage en utilisant le procédé de génération de l'itinéraire de nettoyage du dispositif de nettoyage selon l'une quelconque des revendications 1 à 10 ;
l'acquisition d'une carte environnementale ; et
la génération de la carte de nettoyage en superposant l'itinéraire de nettoyage sur la carte environnementale.

12. Dispositif de nettoyage, comprenant : un processeur et une mémoire, dans lequel
le processeur est configuré pour mettre en œuvre le procédé de génération de la carte de nettoyage du dispositif de nettoyage selon la revendication 11 en exécutant une instruction exécutable stockée dans la mémoire, afin de générer la carte de nettoyage.

13. Système de génération d'une carte de nettoyage d'un dispositif de nettoyage, comprenant :
le dispositif de nettoyage selon la revendication 12,
un terminal, configuré pour afficher la carte de nettoyage générée par le dispositif de nettoyage ; et
un serveur, en connexion de signal avec le dispositif de nettoyage et le terminal séparément, configuré pour recevoir et stocker la carte de nettoyage envoyée par le dispositif de nettoyage, et en outre configuré pour envoyer la carte de nettoyage au terminal.

14. Système de génération de la carte de nettoyage du dispositif de nettoyage selon la revendication 13, dans lequel
un itinéraire de balayage dans la carte de nettoyage affichée par le terminal est en forme de ligne.

15. Système de génération de la carte de nettoyage du dispositif de nettoyage selon la revendication 13, dans lequel
un itinéraire de nettoyage dans la carte de nettoyage affichée par le terminal est en forme de flocon.
